# EUROPÄISCHE PATENTSCHRIFT

(11) **EP 1 418 658 B1**
(45) Veröffentlichungstag und Bekanntmachung des Hinweises auf die Patenterteilung: **04.03.2020**
(21) Anmeldenummer: 03024621.9
(22) Anmeldetag: 25.10.2003
(51) Int. Cl.: H02K 5/136, H02K 5/173, F16M 1/00

(54) **Explosionsgeschütztes Gehäuse**
Explosion-proof housing
Boîtier antidéflagrant

(30) Priorität: 09.11.2002 DE 20217303 U
(43) Veröffentlichungstag der Anmeldung: 12.05.2004
(73) Patentinhaber: AB SKF, 415 50 Göteborg (SE)
(72) Erfinder: Liesegang, Hans-Jürgen, 26419 Schortens (DE); Janssens, Marc, 97072 Würzburg (DE)
(74) Vertreter: Gosdin, Michael

(56) Entgegenhaltungen:
- DE-A1- 3 206 583
- DE-B- 1 059 096
- GB-A- 2 199 905
- SU-A1- 851 653

## Beschreibung

Die Erfindung betrifft ein explosionsgeschütztes, druckfestes Gehäuse nach dem Oberbegriff des Anspruchs 1.

Zur Verhinderung von Explosionen in explosionsgefährdeten Bereichen ist es bekannt, besondere Maßnahmen vorzusehen, die verhindern, dass der explosionsgefährdete Bereich von einer Explosion erfasst wird. Dies kann dadurch geschehen, dass beispielsweise bei elektrischen Geräten durch Steuerung der dabei wirksamen Energien dafür gesorgt wird, dass eine Zündung der potentiell explosiven Atmosphäre nicht erfolgt. In manchen Fällen lässt sich aufgrund der Natur des entsprechenden Gerätes, beispielsweise bei einem Elektromotor, nicht vermeiden, dass es zu Explosionen kommen kann. Die Vermeidung größerer Schäden kann dabei dadurch erreicht werden, dass das Gerät durch sein Gehäuse druckfest gekapselt wird, so dass eine Explosion im Inneren des Gehäuses nicht in die das Gehäuse umgebende Atmosphäre übertragen wird.

Soweit Wellen in das explosionsgeschützte Gehäuse durchgeführt werden müssen, wie es beispielsweise bei Elektromotoren häufig unvermeidlich ist, muss jeweils der zwischen Welle und Gehäuse verbleibende Luftspalt zünddurchschlagsicher ausgebildet sein. Das bedeutet mit anderen Worten, dass die Luftspalte so lang bzw. so schmal sein müssen, dass eine etwaige Explosionsflamme im Inneren des Gehäuses beim Durchtritt durch den Luftspalt gelöscht und soweit abgekühlt wird, dass eine Zündung der Explosionsgase außerhalb des Gehäuses ausgeschlossen ist.

Zur Gewährleistung einer ausreichenden Sicherheit zur Vermeidung des Austritts von Explosionen in den Außenbereich des Gehäuses sind die Parameter Spaltlänge und Spaltbreite des Luftspalts von entscheidender Bedeutung. Aus der DE 198 26 911 A1 sind verschiedene Konstruktionen für explosionsgeschützte Gehäuse bekannt.

Weitere Ausführungsbeispiele für explosionsgeschützte Gehäuse sind aus der DE 10 59 096 B, der SU 851 653 A1, der DE 32 06 583 A1 und der GB 2 199 905 A bekannt.

Die kostengünstige Herstellung gattungsgemäßer explosionsgeschützter Gehäuse bzw. der darin gelagerten Wellen erfordert es, dass bestimmte Fertigungstoleranzen vorgesehen werden. Diese Fertigungstoleranzen führen dazu, dass insbesondere die Breite des Luftspalts innerhalb bestimmter Grenzen variieren kann. Um trotz entsprechend notwendiger Fertigungstoleranzen Luftspalte herstellen zu können, die eine ausreichend exakte Spaltbreite bzw. Spaltlänge aufweisen, ist es üblich, sogenannte Spalteinsätze zu verwenden. Nach der Fertigung der Welle und des zugehörigen Gehäuses werden die Ist-Maße der entsprechenden Bereiche vermessen und dann in Abhängigkeit dieser Ist-Maße ein Spalteinsatz gefertigt, so dass durch Anordnung des Spalteinsatzes zwischen Welle und Gehäuse ein Luftspalt mit der gewünschten Spaltbreite entsteht. Da die Spalteinsätze jeweils in Abhängigkeit der Fertigungsmaße des Gehäuses bzw. der Welle gefertigt werden müssen, handelt es sich um Unikate, deren Fertigung für jedes Gehäuse einzeln protokolliert und archiviert werden muss. Weiter ist ein außerordentlich hoher Messaufwand erforderlich, um die Spalteinsätze so genau fertigen zu können, dass die Luftspalte ausreichend zünddurchschlagssicher sind.

Ausgehend von diesem Stand der Technik ist es Aufgabe der vorliegenden Erfindung ein neues explosionsgeschütztes Gehäuse vorzuschlagen.

Diese Aufgabe wird durch ein explosionsgeschütztes Gehäuse nach der Lehre des Patentanspruchs 1 gelöst.

Vorteilhafte Ausführungsformen der Erfindung sind Gegenstand der Unteransprüche.

Der Vorteil des erfindungsgemäßen Gehäuses liegt insbesondere darin, dass im Bereich zwischen dem Gehäuse und der Welle eine verstellbare Justiereinheit angeordnet wird. Diese verstellbare Justiereinheit ist dabei derart auszubilden, dass durch Verstellung der Justiereinheit die Spaltbreite und/oder die Spaltlänge des Luftspalts einstellbar ist. Im Ergebnis wird dadurch erreicht, dass die Maßtoleranzen des Luftspalts durch Einstellung der Justiereinheit ausgeglichen werden können. Nach der Montage der Welle im Gehäuse wird dazu solange die Justiereinheit nachgestellt, bis das gewünschte Maß der Spaltbreite bzw. der Spaltlänge des Luftspalts erreicht ist. Die erfindungsgemäße Justiereinheit kann dabei als Serienteil gefertigt werden, das unabhängig von den Fertigungsmaßen der einzelnen Gehäuse bzw. Wellen einsetzbar ist. Dadurch wird insbesondere auch eine Wiederverwendbarkeit der Justiereinheiten im Reparaturfall gewährleistet.

In welcher Weise die Justiereinheit konstruktiv ausgebildet ist, ist grundsätzlich beliebig. Eine besonders einfach herzustellende und einfach einzustellende Justiereinheit ergibt sich, wenn die Justiereinheit eine außenkonische Innenhülse und eine innenkonische Außenhülse aufweist. Die Innenhülse und die Außenhülse kommen bei der Montage des erfindungsgemäßen Gehäuses mit ihren Konusflächen formschlüssig aneinander zur Anlage. Wird die Außenhülse durch entsprechend geeignete Einspannung auf die Innenhülse aufgeschoben, so kann dadurch erreicht werden, dass die Außenhülse aufgrund des zunehmenden Durchmessers der Innenhülse entsprechend aufgeweitet wird, so dass der von dem Außenumfang der Außenhülse gebildete Luftspalt verengt wird. Umgekehrt ist es selbstverständlich ebenfalls möglich durch Einschieben der Innenhülse in die Außenhülse den Innendurchmesser der Innenhülse zumindest geringfügig zu verkleinern und dadurch ebenfalls einen von der Innenfläche der Innenhülse gebildeten Luftspalt zu verengen. Im ersten Fall kann die Innenhülse einteilig mit der Welle, im zweiten Fall die Außenhülse einteilig mit dem Gehäuse ausgebildet sein.

Um die entsprechende Aufweitung bzw. Verengung der Außenhülse bzw. der Innenhülse zu ermöglichen, sollte die Außenhülse bzw. die Innenhülse aus einem entsprechend elastisch dehnbaren Material hergestellt sein.

Welche Maßtoleranzen durch Einbau der erfindungsgemäßen Justiereinheit ausgeglichen werden können, hängt insbesondere auch davon ab, wie weit die Außenhülse aufgeweitet bzw. die Innenhülse zusammengedrückt werden kann. Die Aufweitung der Außenhülse bzw. die Verengung der Innenhülse kann erheblich dadurch vereinfacht werden, dass die Innenhülse und/oder die Außenhülse Schlitze aufweisen. Die Bauteilwandung der Innenhülse bzw. der Außenhülse werden durch diese Schlitze zumindest abschnittsweise durchbrochen, so dass die geschlitzten Abschnitte im Wesentlichen keinen mechanischen Widerstand gegen die Aufweitung bzw. das Zusammendrücken bieten.

Negative Auswirkungen der Schlitze in den Hülsen auf das Explosionsschutzverhalten können weitgehend dadurch ausgeschlossen werden, dass die Schlitze nur zur Außenseite des Gehäuses hin offen sind. Dadurch wird erreicht, dass die von der Innenseite des Gehäuses ausgehende Explosionsfront sich nicht in den Schlitzen sammeln kann, sondern erst nach entsprechender Abkühlung im ungeschlitzten Bereich des Luftspalts in die Schlitze gelangt.

Eine Ausführungsform der Erfindung ist in den Zeichnungen dargestellt und wird nachfolgend beispielhaft erläutert.

Es zeigen:
- Figur 1: einen Ausschnitt aus einem Ausführungsbeispiel für das erfindungsgemäße Gehäuse mit Justiereinheit in Schnittdarstellung,
- Figur 2: die Justiereinheit gemäß Figur 1 in Ansicht von oben und
- Figur 3: ein weiteres Ausführungsbeispiel für das erfindungsgemäße Gehäuse mit Justiereinheit in einer Figur 1 entsprechenden Darstellung.

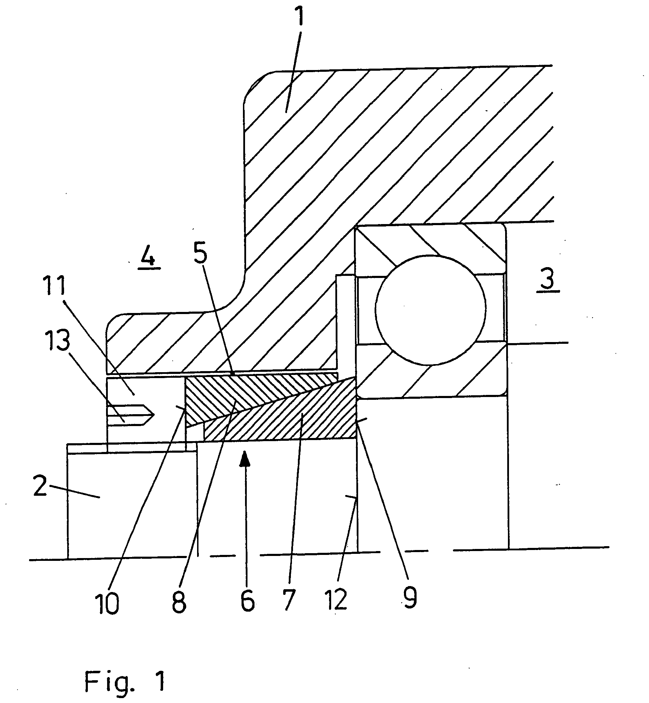

In Figur 1 ist ein explosionsgeschützter Elektromotor mit einem Ausführungsbeispiel für ein Gehäuse, von dem in Figur 1 nur ein Gehäuseteil 1, beispielsweise ein Lagerschild, erkennbar ist, und einer drehbar im Gehäuse gelagerten Welle 2 im Ausschnitt dargestellt. Um zu verhindern, dass nach der Entzündung eines Explosionsgases im Inneren 3 des Elektromotors die Zündflamme in den das Gehäuse umgebenden Außenbereich 4 übertragen wird, ist zwischen dem Gehäuseteil 1 und der Welle 2 ein zünddurchschlagsicherer Luftspalt 5 vorgesehen. Die Breite und Länge des Luftspaltes 5 sind dabei so bemessen, dass bei einer Explosion im Innenbereich 3 des Gehäuses die Explosionsfront im Luftspalt 5 soweit abgekühlt wird, dass eine Zündung des Explosionsgases im Außenbereich 4 ausgeschlossen ist.

Um die Breite des Luftspaltes 5 in Abhängigkeit von den Fertigungstoleranzen für das Gehäuseteil 1 und die Welle 2 einstellen zu können, wird zwischen dem Gehäuseteil 1 und der Welle 2 eine Justiereinheit 6 angeordnet. Die Justiereinheit 6 besteht im wesentlichen aus einer außenkonischen Innenhülse 7 und einer innenkonischen Außenhülse 8. Die Innenumfangsfläche der Innenhülse 7 ist zylindrisch ausgebildet und liegt an der Welle 2 an. Die Innenhülse 7 kann auch einteilig mit der Welle 2 ausgebildet sein. Die Außenumfangsfläche der Außenhülse 8 ist zylindrisch gebildet, so dass durch die Außenhülse 8 und die gegenüberliegende Innenfläche des Gehäuseteils 1 der Luftspalt 5 mit einem kreisringförmigen Querschnitt gebildet wird.

Die Innenhülse 7 bzw. die Außenhülse 8 stehen mit ihren Stirnflächen 9 bzw. 10 jeweils ein Stück über, so dass die Außenhülse durch Aufbringung einer entsprechenden Spannkraft gegen die Innenhülse verspannt werden kann. Zur Aufbringung der Spannkraft ist ein Spannelement 11 vorgesehen, das ein Außengewinde aufweist. Das Spannelement 11 kann einteilig mit der Außenhülse 8 oder als separates Bauteil ausgebildet sein und auf ein an der Welle 2 vorgesehenes Gewinde aufgeschraubt werden, so dass sich der Abstand zwischen dem Spannelement 11 und einer Schulter 12 der Welle 2 verkürzen lässt. Im Ergebnis kann dadurch erreicht werden, dass die Außenhülse 8 durch entsprechendes Zustellen des Spannelements 11 auf die Innenhülse 7 aufgeschoben und dabei aufgeweitet wird. Je nach Aufweitung der Außenhülse 8 ergibt sich dann eine entsprechende Spaltbreite im Luftspalt 5.

Am Spannelement 11 sind Werkzeugeingriffsflächen 13 vorgesehen, die vom Außenbereich 4 zugänglich sind. Dadurch wird es möglich die Spaltbreite des Wellendurchführspaltes 5 nach der kompletten Montage des Elektromotors durch entsprechende Verstellung des Spannelements 11 von außerhalb des Gehäuses einzustellen.

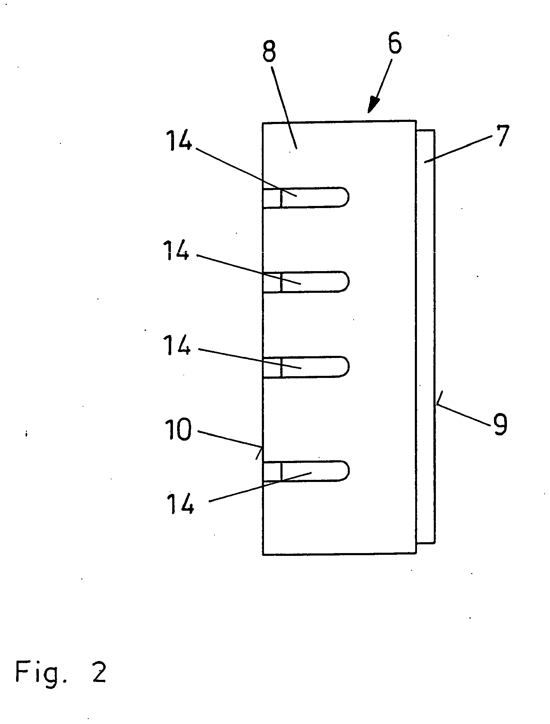

In Figur 2 ist die Justiereinheit 6 mit der Innenhülse 7 und der Außenhülse 8 in Ansicht von oben dargestellt. Dabei sind gleichmäßig über den Umfang verteilte Schlitze 14 erkennbar, die die Bauteilwandung der Außenhülse 8 ausgehend von der Stirnfläche 10 bis ungefähr zu Mitte der Außenhülse 8 durchbrechen. Durch die Schlitze 14 wird der Widerstand der Außenhülse 8 gegen ein Aufweiten beim Aufschieben auf die Innenhülse 7 erheblich verringert, da die Schlitze 14 die Bauteilwandung im Bereich der größten Wandstärke der Außenhülse 8 durchbrechen. Eine negative Auswirkung auf die Zünddurchschlagssicherheit wird durch die Schlitze 14 nicht bewirkt, da die Schlitze 14 nur zur Seite des Außenbereichs 4 hin offen sind, so dass die Explosionsfront beim Durchlaufen des Wellendurchführspaltes 5 bis zum Erreichen der Schlitze 14 bereits stark abgekühlt ist.

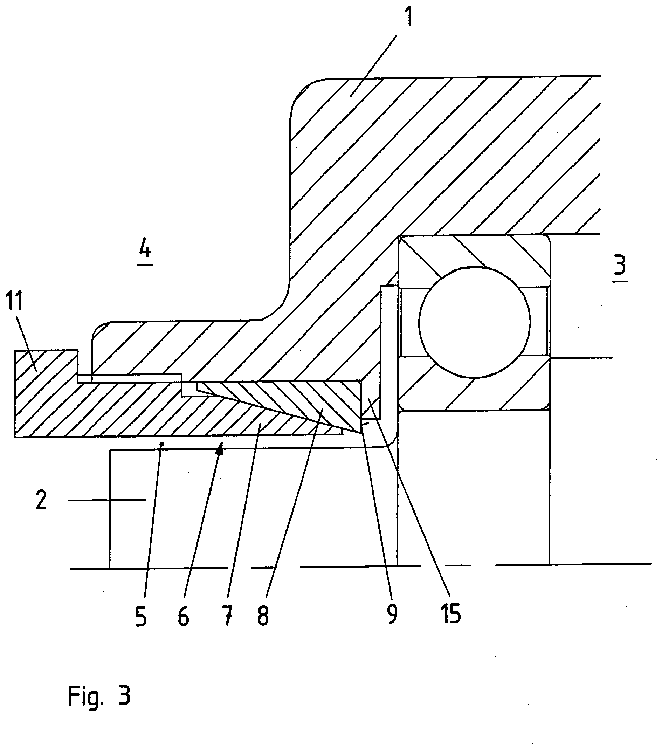

Figur 3 zeigt ein weiteres Ausführungsbeispiel für das Gehäuse mit der Justiereinheit 6 in einer Figur 1 entsprechenden Darstellung. Dieses Ausführungsbeispiel unterscheidet sich von Figur 1 im wesentlichen dadurch, dass die Außenhülse 8 mit ihrer Außenumfangsfläche am Gehäuseteil 1 anliegt und der Luftspalt 5 durch die Innenhülse 7 und die gegenüberliegende Außenfläche der Welle 2 ausgebildet wird. Auch bei diesem Ausführungsbeispiel weist der Luftspalt 5 einen kreisringförmigen Querschnitt auf. Die Außenhülse 8 liegt mit ihrer Stirnfläche 9 axial an einem radialen Vorsprung 15 des Gehäuseteils 1 an. In einer nicht dargestellten Abwandlung ist die Außenhülse 8 einteilig mit dem Gehäuseteil 1 ausgebildet. Die Innenhülse 7 ist mittels der Spannschraube 11, die bei diesem Ausführungsbeispiel in ein Gewinde im Gehäuseteil 1 eingreift und als getrenntes Bauteil oder einteilig mit der Innenhülse 7 ausgebildet sein kann, axial verschiebbar. Durch die axiale Verschiebung wird die Innenhülse 7 mehr oder weniger stark komprimiert und dadurch die Breite des Luftspalts 5 variiert.

### Bezugszeichenliste

- 1: Gehäuseteil
- 2: Welle
- 3: Innenbereich
- 4: Außenbereich
- 5: Luftspalt
- 6: Justiereinheit
- 7: Innenhülse
- 8: Außenhülse
- 9: Stirnfläche
- 10: Stirnfläche
- 11: Spannelement
- 12: Schulter (Welle)
- 13: Werkzeugeingriffsfläche
- 14: Schlitz (Außenhülse)
- 15: radialer Vorsprung

## Patentansprüche

1. Explosionsgeschützes, druckfestes Gehäuse (1) mit zumindest einer Wellendurchführung, wobei ein ringförmiger Luftspalt (5) im Bereich zwischen dem Gehäuse (1) einerseits und einer drehbar gelagerten Welle (2) anderseits zünddurchschlagssicher ausgebildet ist, **dadurch gekennzeichnet, dass** im Bereich zwischen dem Gehäuse (1) und der Welle (2) eine verstellbare Justiereinheit (6) angeordnet ist, mit der die Spaltbreite und/oder die Spaltlänge des Luftspaltes (5) einstellbar ist, wobei die Justiereinheit (6) solange nachgestellt wird, bis das gewünschte Maß der Spaltbreite bzw. der Spaltlänge des Luftspalts (5) erreicht ist.

2. Gehäuse nach Anspruch 1, **dadurch gekennzeichnet, dass** die Justiereinheit (6) eine außenkonische Innenhülse (7) und eine innenkonische Außenhülse (8) aufweist, wobei die Innenhülse (7) und die Außenhülse (8) mit ihren Konusflächen formschlüssig aneinander zur Anlage bringbar sind.

3. Gehäuse nach Anspruch 2, **dadurch gekennzeichnet, dass** die Innenhülse (7) eine zylindrische Innenumfangsfläche und/oder die Außenhülse (8) eine zylindrische Außenumfangsfläche aufweisen.

4. Gehäuse nach einem der Ansprüche 2 oder 3, **dadurch gekennzeichnet, dass** die Innenhülse (7) radial an der Welle (2) anliegt und der Luftspalt zwischen der Außenhülse (8) und dem Gehäuse (1) ausgebildet wird.

5. Gehäuse nach Anspruch 4, **dadurch gekennzeichnet, dass** die Innenhülse (7) einteilig mit der Welle (2) ausgebildet ist.

6. Gehäuse nach einem der Ansprüche 2 oder 3, **dadurch gekennzeichnet, dass** die Außenhülse (8) radial am Gehäuse (1) anliegt und der Luftspalt (5) zwischen der Innenhülse (7) und der Welle (2) ausgebildet wird.

7. Gehäuse nach Anspruch 6, **dadurch gekennzeichnet, dass** die Außenhülse (8) einteilig mit dem Gehäuse (1) ausgebildet ist.

8. Gehäuse nach Anspruch 2 bis 7, **dadurch gekennzeichnet, dass** die Innenhülse (7) und/oder die Außenhülse (8) aus einem elastisch dehnbaren Material hergestellt sind.

9. Gehäuse nach einem der Ansprüche 2 bis 8, **dadurch gekennzeichnet, dass** die Innenhülse (7) und/oder die Außenhülse (8) Schlitze (14) aufweisen, die die Bauteilwandung der Innenhülse (7) und/oder der Außenhülse (8) zumindest abschnittsweise durchbrechen.

10. Gehäuse nach Anspruch 9, **dadurch gekennzeichnet, dass** die Schlitze (14) nur zur Außenseite (4) des Gehäuses (1) hin offen sind.

11. Gehäuse nach einem der Ansprüche 2 bis 10, **dadurch gekennzeichnet, dass** die Innenhülse (7) lediglich soweit in die Außenhülse (8) einsteckbar ist, dass die Stirnfläche (9) der Innenhülse (7) mit dem größeren Außendurchmesser an einem Ende der Justiereinheit (6) gegenüber der benachbarten Stirnfläche der Außenhülse (8) übersteht und die Stirnfläche (10) der Außenhülse (8) mit dem kleineren Innendurchmesser am gegenüberliegenden Ende der Justiereinheit (6) gegenüber der benachbarten Stirnfläche der Innenhülse (7) übersteht.

12. Gehäuse nach Anspruch 10, **dadurch gekennzeichnet, dass** eine der überstehenden Stirnflächen (9) an einen Axialanschlag (12, 15) der Welle (2) oder des Gehäuses (1) zur Anlage bringbar ist und an der anderen überstehenden Stirnfläche (10) ein Spannelement (11) zum Eingriff bringbar ist, wobei die Außenhülse (8) durch Betätigung des Spannelements (11) gegen die Innenhülse (7) gespannt werden kann.

13. Gehäuse nach Anspruch 12, **dadurch gekennzeichnet, dass** das Spannelement (11) ein Gewinde aufweist, das in ein Gewinde an der Welle (2) oder am Gehäuse (1) eingreift.

14. Gehäuse nach Anspruch 12 oder 13, **dadurch gekennzeichnet, dass** das Spannelement (11) von außerhalb des Gehäuses (1) betätigbar ist.

15. Gehäuse nach einem der Ansprüche 1 bis 14, **dadurch gekennzeichnet, dass** das Gehäuse (1) als Gehäuse eines Elektromotors ausgebildet ist.

## Claims

1. Explosion-proof, pressure-resistant housing (1) having at least one shaft bushing, wherein an annular air gap (5) designed to be ignition-proof is formed in the region between a housing (1), on the one hand, and the rotatably mounted shaft (2), on the other hand, **characterized in that** in the region between the housing (1) and the shaft (2) there is arranged an adjustable adjustment unit (6), with which the gap width and/or the gap length of the air gap (5) can be adjusted, wherein the adjustment unit (6) is repositioned until the desired dimension of the gap width or the gap length of the air gap (5) is achieved.

2. Housing according to Claim 1, **characterized in that** the adjustment unit (6) has an externally conical inner sleeve (7) and an internally conical outer sleeve (8), wherein the inner sleeve (7) and the outer sleeve (8) can be brought with their conical surfaces into form-fitting contact with one another.

3. Housing according to Claim 2, **characterized in that** the inner sleeve (7) has a cylindrical inner circumferential surface and/or the outer sleeve (8) has a cylindrical outer circumferential surface.

4. Housing according to either of Claims 2 and 3, **characterized in that** the inner sleeve (7) rests radially on the shaft (2) and the air gap is formed between the outer sleeve (8) and the housing (1).

5. Housing according to Claim 4, **characterized in that** the inner sleeve (7) is formed in one piece with the shaft (2).

6. Housing according to either of Claims 2 and 3, **characterized in that** the outer sleeve (8) rests radially on the housing (1) and the air gap (5) is formed between the inner sleeve (7) and the shaft (2).

7. Housing according to Claim 6, **characterized in that** the outer sleeve (8) is formed in one piece with the housing (1).

8. Housing according to Claim 2 to 7, **characterized in that** the inner sleeve (7) and/or the outer sleeve (8) is/are produced from an elastically stretchable material.

9. Housing according to one of Claims 2 to 8, **characterized in that** the inner sleeve (7) and/or the outer sleeve (8) have slots (14), which at least partly break through the component wall of the inner sleeve (7) and/or the outer sleeve (8).

10. Housing according to Claim 9, **characterized in that** the slots (14) are open only towards the outer side (4) of the housing (1).

11. Housing according to one of Claims 2 to 10, **characterized in that** the inner sleeve (7) can be inserted into the outer sleeve (8) only to such an extent that the end face (9) of the inner sleeve (7) with the larger external diameter at one end of the adjustment unit (6) projects with respect to the adjacent end face of the outer sleeve (8), and the end face (10) of the outer sleeve (8) with the smaller internal diameter at the opposite end of the adjustment unit (6) projects with respect to the adjacent end face of the inner sleeve (7).

12. Housing according to Claim 10, **characterized in that** one of the projecting end faces (9) can be brought into contact with an axial stop (12, 15) of the shaft (2) or of the housing (1) and, at the other projecting end face (10), a clamping element (11) can be brought into engagement, wherein the outer sleeve (8) can be clamped against the inner sleeve (7) by actuating the clamping element (11).

13. Housing according to Claim 12, **characterized in that** the clamping element (11) has a thread which engages in a thread on the shaft (2) or on the housing (1) .

14. Housing according to Claim 12 or 13, **characterized in that** the clamping element (11) can be actuated from outside the housing (1).

15. Housing according to one of Claims 1 to 14, **characterized in that** the housing (1) is formed as a housing of an electric motor.

## Revendications

1. Boîtier (1) antidéflagrant et résistant à la pression comprenant au moins un passage d'arbre, un espace d'air annulaire (5) étant ménagé de manière à résister au claquage dans la région située entre le boîtier (1) d'une part et un arbre (2) monté à rotation d'autre part, **caractérisé en ce qu'**une unité de réglage réglable (6) est disposée dans la région située entre le boîtier (1) et l'arbre (2) et permet de régler la largeur et/ou la longueur de l'espace d'air (5), l'unité de réglage (6) étant réglée jusqu'à ce que la dimension souhaitée de la largeur ou de la longueur de l'espace d'air (5) soit atteinte.

2. Boîtier selon la revendication 1, **caractérisé en ce que** l'unité de réglage (6) comporte un manchon intérieur (7) conique à l'extérieur et un manchon extérieur (8) conique à l'intérieur, le manchon intérieur (7) et le manchon extérieur (8) pouvant être amenés en appui l'un sur l'autre par complémentarité de formes au niveau de leurs surfaces coniques.

3. Boîtier selon la revendication 2, **caractérisé en ce que** le manchon intérieur (7) comporte une surface périphérique intérieure cylindrique et/ou le manchon extérieur (8) comporte une surface périphérique extérieure cylindrique.

4. Boîtier selon l'une des revendications 2 et 3, **caractérisé en ce que** le manchon intérieur (7) vient en appui radialement sur l'arbre (2) et l'espace d'air est ménagé entre le manchon extérieur (8) et le boîtier (1).

5. Boîtier selon la revendication 4, **caractérisé en ce que** le manchon intérieur (7) est formé d'une seule pièce avec l'arbre (2).

6. Boîtier selon l'une des revendications 2 et 3, **caractérisé en ce que** le manchon extérieur (8) vient en appui radialement sur le boîtier (1) et l'espace d'air (5) est formé entre le manchon intérieur (7) et l'arbre (2) .

7. Boîtier selon la revendication 6, **caractérisé en ce que** le manchon extérieur (8) est formé d'une seule pièce avec le boîtier (1).

8. Boîtier selon les revendications 2 à 7, **caractérisé en ce que** le manchon intérieur (7) et/ou le manchon extérieur (8) sont fabriqués à partir d'un matériau extensible élastiquement.

9. Boîtier selon l'une des revendications 2 à 8, **caractérisé en ce que** le manchon intérieur (7) et/ou le manchon extérieur (8) comportent des fentes (14) qui traversent au moins par endroits la paroi constitutive du manchon intérieur (7) et/ou du manchon extérieur (8) .

10. Boîtier selon la revendication 9, **caractérisé en ce que** les fentes (14) ne sont ouvertes que vers le côté extérieur (4) du boîtier (1).

11. Boîtier selon l'une des revendications 2 à 10, **caractérisé en ce que** le manchon intérieur (7) ne peut être enfiché dans le manchon extérieur (8) que dans la mesure où la face frontale (9) du manchon intérieur (7) ayant le plus grand diamètre extérieur fait saillie de la face frontale adjacente du manchon extérieur (8) à une extrémité de l'unité de réglage (6) et la face frontale (10) du manchon extérieur (8) ayant le plus petit diamètre intérieur fait saillie de la face frontale adjacente du manchon intérieur (7) à l'extrémité opposée de l'unité de réglage (6).

12. Boîtier selon la revendication 10, **caractérisé en ce que** l'une des faces frontales saillantes (9) peut être amenée en appui sur une butée axiale (12, 15) de l'arbre (2) ou du boîtier (1) et un élément de serrage (11) peut être amené en engagement sur l'autre face frontale saillante (10), le manchon extérieur (8) pouvant être serré contre le manchon intérieur (7) par actionnement de l'élément de serrage (11).

13. Boîtier selon la revendication 12, **caractérisé en ce que** l'élément de serrage (11) comporte un filetage qui s'engage dans un filetage au niveau de l'arbre (2) ou du boîtier (1).

14. Boîtier selon la revendication 12 ou 13, **caractérisé en ce que** l'élément de serrage (11) peut être actionné depuis l'extérieur du boîtier (1).

15. Boîtier selon l'une des revendications 1 à 14, **caractérisé en ce que** le boîtier (1) est conçu comme un boîtier d'un moteur électrique.
